# EUROPÄISCHE PATENTANMELDUNG

(11) **EP 1 182 082 A1**
(43) Veröffentlichungstag der Anmeldung: **27.02.2002**
(21) Anmeldenummer: 00117534.8
(22) Anmeldetag: 14.08.2000
(51) Int. Cl.: B60P 7/15, B60P 7/08

(54) **Lösbares Befestigungssystem für Stückgut**

(71) Anmelder: SORTIMO INTERNATIONAL AUSRÜSTUNGSSYSTEME FÜR SERVICEFAHRZEUGE GmbH, D-86441 Zusmarshausen (DE)
(72) Erfinder: Ensenmeier, Knuth, 86161 Augsburg (DE)
(74) Vertreter: Zipse + Habersack

(57) **Zusammenfassung**

Die Erfindung betrifft ein lösbares Befestigungssystem für Stückgut (64, 66, 68) in einem bewegbaren Transportraum (10), z.B. eines Fahr- oder Flugzeugs, umfassend wenigstens eine Aufroll- und/oder Spannvorrichtung (28) für mindestens einen Spanngurt (30), der in dem Raum (10) mittels dort vorgesehener Befestigungselemente (26) festlegbar und verspannbar ist, um das Stückgut zu sichern. In dem Raum (10) ist wenigstens eine Spannstange zwischen Boden (14) und Decke (12) bzw. zwischen zwei Wänden (16) in einer oder mehreren unterschiedlichen Stellungen festgelegt oder festlegbar, welche Spannstange (22) wenigstens ein Befestigungselement (26) aufweist. Dies ermöglicht eine sehr sichere und schonende Festlegung von Stückgut unterschiedlichster Form und Größe.

## Beschreibung

Die vorliegende Erfindung betrifft ein lösbares Befestigungssystem, mit dem Stückgut in einem bewegbaren Raum wie zum Beispiel in einem Land- oder Wasserfahrzeug, einem Flugzeug oder einem Container in seiner Lager- oder Transportposition festlegbar ist. Insbesondere ist ein derartiges System für Transportfahrzeuge und Lastwagen sinnvoll.

Derartige Systeme sind zum Beispiel in der DE 197 25 254 C1 beschrieben. Das dort gezeigte Befestigungssystem umfaßt eine federvorgespannte Aufrollvorrichtung für einen Spanngurt, der in einer Führung entlang einer Seitenwand des Raumes geführt ist. An beliebigen Stellen läßt sich der Spanngurt aus der Seitenwand herausführen und an einer anderen beliebigen Stelle wieder hereinführen. Hierfür sind im Bereich der Führung des Spanngurtes viele seitliche Öffnungen vorgesehen, durch die eine Gurtschlaufe herausgezogen und um das zu befestigende Stückgut herumgelegt werden kann. Die Befestigung der Schlaufe erfolgt an einem Spannstift im Bereich der Führung. Der Spannstift wird aus einer senkrechten Festlegestellung herausgeklappt, so dass ein Ende offen ist. Über dieses offene Ende des Spannstiftes wird die Gurtschleife gelegt und der Spannstift wieder zurückgedrückt. Ein derartiges Gurtsystem ermöglicht zwar eine relativ zuverlässige Sicherung des Stückgutes während eines Transportes, ist jedoch relativ aufwendig zu handhaben, nicht zuletzt aufgrund der Schlaufenführung des Bandes, die erfordert, dass das Band immer zweilagig um das Stückgut herumgeführt wird. Dies verlangt zum einen eine sehr große Länge des Spanngurtes und bringt zum anderen eine große Reibung mit sich, was die Handhabung, wie bereits gesagt, beeinträchtigt. Zudem wird bei diesem System das Stückgut je nach Geometrie über einen relativ großen Bereich umschlungen, was bei den eventuell notwendigen Gurtspannungen zu einer Beschädigung des Stückguts führen kann.

Der Erfindung liegt daher die Aufgabe zugrunde, ein einfach handhabbares und zuverlässiges Sicherungssystem für Stückgut zu schaffen, das leicht unterschiedlichen Geometrien des zu transportierenden Gutes angepaßt werden kann.

Die Aufgabe wird erfindungsgemäß durch ein Befestigungssystem mit den Merkmalen des Anspruchs 1 gelöst. Vorteilhafte Weiterbildungen der Erfindung sind Gegenstand der Unteransprüche.

Erfindungsgemäß ist in dem Transportraum für das Stückgut wenigstens eine Spannstange vorgesehen, die entweder zwischen Boden und Decke und/oder zwischen zwei vertikalen gegenüberliegenden Wänden festgelegt wird. Die Enden der Spannstange werden in dafür vorgesehene Halterungen an den Wänden, Böden oder Decken festgelegt. Besonders vorteilhaft ist hier eine Festlegung in Airline-Schienen, die eine variable Festlegung einer Spannstange entsprechend dem Verlauf der Schiene an unterschiedlichen Positionen ermöglicht, wodurch sich die Stange sehr gut in ihrer Position an die individuellen Geometrien und Größen des Stückgutes anpassen läßt.

Alternativ dazu kann statt eines Schienensystems auch lediglich ein Befestigungsbereich an beiden Enden oder wenigstens an einem Ende der Spannstange vorgesehen sein, wobei die Spannstange dann durch Druck zwischen Boden und Decke bzw. zwischen den gegenüberliegenden Wänden verspannt wird. Der Druck kann durch eine federvorgespannte Teleskopeinrichtung aufgebracht werden. Dieses System hat den Vorteil, dass die Spannstange an jeder gewünschten Stelle im Raum angeordnet werden kann. Sie ist jedoch in ihrer Festlegung nicht so sicher wie die Befestigung mit dem Airline-Schienen-System. An der Spannstange ist nun wenigstens ein Befestigungselement angeordnet, das entweder den Gurt führt bzw. umlenkt oder das Gurtende aufnimmt. Auf diese Weise kann der Gurtverlauf sehr gut auf die erforderlichen Geometrien des Stückgutes eingestellt werden. Vorzugsweise ist das Befestigungsmittel relativ frei beweglich an der Spannstange gehalten, so dass es bei der Verspannung des Spanngurtes selbsttätig in seine optimale Position gezogen wird. Es ist auch möglich, ein derartiges Befestigungsmittel frei beweglich an der Spannstange anzuordnen, es jedoch mit einer Festlegeeinrichtung, z.B. einer Schelle mit Schnellspannverschluß zu versehen, mittels dessen sich das Befestigungselement dann sicher in der optimalen Lage festlegen läßt.

Das Befestigungselement ist vorzugsweise in Art eines die Spannstange umgreifenden Gehäuses ausgebildet, das einen Spannstift aufweist, durch das der Spanngurt umgelenkt wird oder das Ende des Spanngurtes eingehängt wird. Dieser Spannstift kann derart ausgebildet sein, dass er an einem Ende festgelegt ist und dass das andere Ende des Spannstiftes frei bewegbar ist, um den Spanngurt über den Spannstift zu legen. Dies ermöglicht ein müheloses und sicheres Festlegen des Spanngurtes an dem Befestigungselement.

Zum Vorspannen des Spanngurtes wird vorzugsweise ein federvorgespannter Aufrollmechanismus verwendet, der zum einen einen sicheren und kompakten Schutz für nicht genutzte Spanngurtlänge bereitstellt und zum anderen bereits eine gewisse Vorspannung auf den Spanngurt ausübt. Vorzugsweise ist zusätzlich zu dem Aufrollmechanismus ein Spannmechanismus im Gurtverlauf vorgesehen, der z. B. als Ratschenaufrollmechanismus gebildet sein kann, wobei die festgespannte Stellung durch eine Ratsche gesichert wird, die nur manuell oder elektrisch wieder freigebbar ist. Selbstverständlich lassen sich ein vorgespannter Aufrollmechanismus und ein manuelles Spannsystem, z.B. mit einem Ratschenmechanismus auch alternativ verwenden.

Die Erfindung wird nachfolgend beispielsweise anhand der schematischen Zeichnung beschrieben. In dieser zeigen:
- Fig. 1: einen vertikalen Querschnitt durch einen Container oder den Transportraum eines Fahr- oder Flugzeuges,
- Fig. 2: eine detaillierte perspektivische Ansicht eines an einer Spannstange festlegbaren Befestigungselements,
- Fig. 3: eine schematische Aufsicht auf den Aufroll- und Spannmechanismus für den Spanngurt,
- Fig. 4: einen horizontalen Schnitt durch die Seitenwand eines Laderaums mit daran angeordneter Aufrollund Spannvorrichtung und Gurtführung,
- Fig. 5: eine Aufsicht auf einen Kleintransporter mit herkömmlichem Gurtsystem nach dem Stand der Technik,
- Fig. 6 u. 7: Aufsichten auf einen Kleintransporter mit einer Ladesicherung unter Verwendung der erfindungsgemäßen Spannstangen.

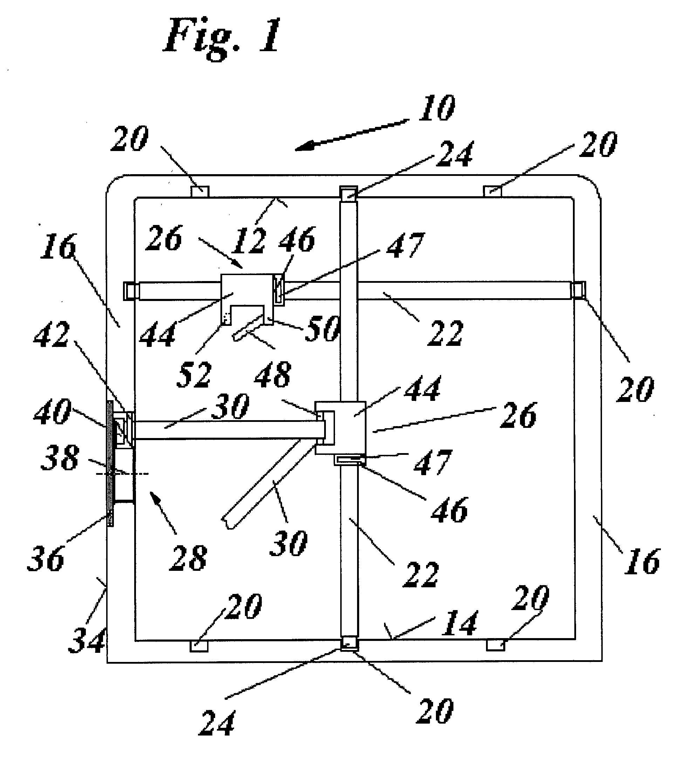

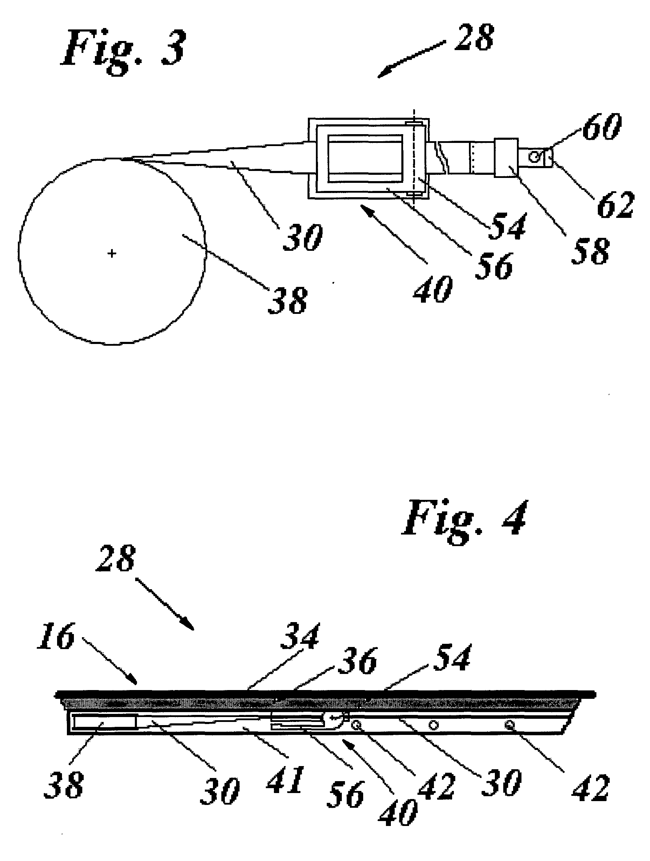

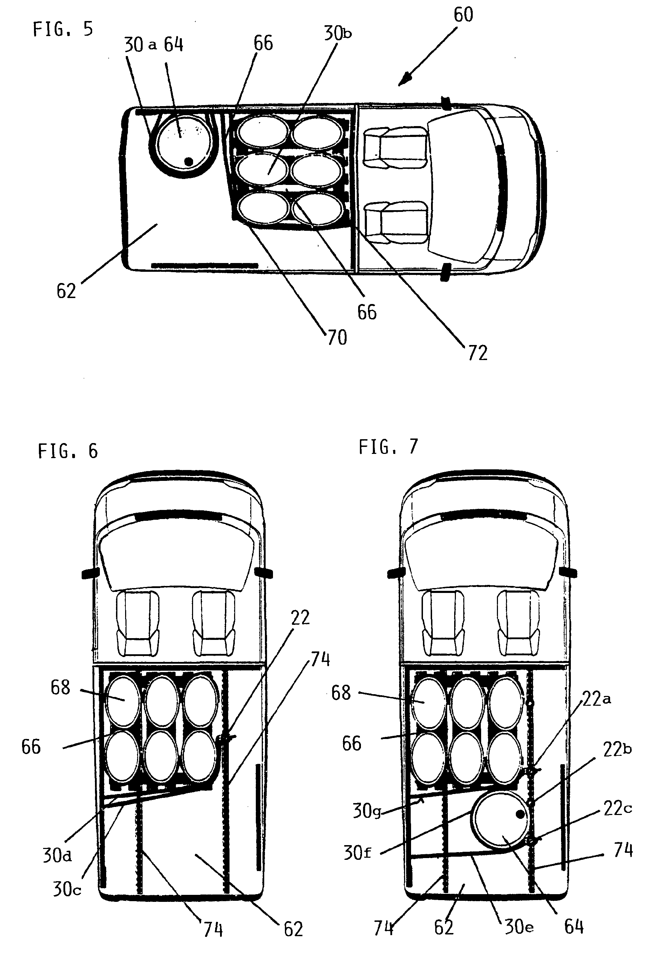

Figur 1 zeigt den Laderaum 10 eines Fahr- oder Flugzeuges oder auch eines Containers, in dem Stückgut transportiert werden kann. Die Figur zeigt einen vertikalen Schnitt quer zur Längsachse des Laderaumes. In dem Laderaum 10 sind in der Decke 12 und im Fußboden 14 als auch in den Seitenwänden 16 Airline-Schienen 20 angeordnet, die in Längsrichtung des Transportraumes 10 verlaufen. Die sogenannten Airline-Schienen erlauben eine Verrastung von Elementen entlang der Schienenstrecke. In der Decke 12 und im Boden 14 bzw. den Seitenwänden 16 liegen sich immer zwei Airline-Schienen 20 gegenüber, in die dann eine Spannstange 22 einsetzbar ist. Die Enden 24 der Spannstange 22 werden zum Beispiel in der Airline-Schiene 20 der Decke 12 und einer Airline-Schiene 20 des Bodens 14 festgelegt, so dass die Stange 22 vertikal verläuft. An der Spannstange 22 ist ein Befestigungselement 26 axial beliebig verfahrbar und in jede gewünschte Drehstellung bewegbar, wie nachfolgend noch detaillierter ausgeführt wird. In der linken Seitenwand 16 ist eine Aufroll- und Spannvorrichtung 28 für einen Spanngurt 30 dargestellt, der an der Innenseite der Außenwand 34 des Raumes und einer dahinter angeordneten Dämmschicht 36 angeordnet ist. Die Aufroll- und Spannvorrichtung 28 umfaßt eine Gurtrolle 38, die federnd in eine Aufrollposition vorgespannt ist als auch eine im Gurtverlauf nachgeordnete Ratschen-Spannvorrichtung 40, um den Spanngurt 30 anspannen und festlegen zu können. Die detaillierteren Ansichten hierzu befinden sich auch in den Figuren 3 und 4. Der Spanngurt 30 verläuft dann weiterhin in einer seitlichen Schiene innerhalb der Seitenwand 16 und kann dort an beliebigen Stellen zwischen vertikalen Führungsstiften 42 aus der Seitenwand herausgezogen und um das Stückgut gelegt werden. Die Befestigung der herausgezogenen Gurtschlaufe erfolgt beim Stand der Technik an herausklappbaren Führungsstiften 42 an einer anderen Stelle der gleichen oder einer anderen Seitenwand, wie dies auch im Hinblick auf Figur 5 sehr schön zu sehen ist.

In dem Fixierungssystem der vorliegenden Erfindung wird der Gurt über die bzw. zu den Befestigungselemente(n) 26 an den Spannstangen geführt. Das Befestigungselement 26 umfaßt ein an der Spannstange 22 beliebig bewegbares Gehäuse 44, das eine von der Spannstange durchsetzte Bohrung aufweist und eine an dem Gehäuse 26 angeordnete Klemmschelle 46 mit Schnellspannvorrichtung 47, um das Befestigungselement 26 in beliebiger Stellung an der Spannstange 22 festlegen zu können. In diesem Zusammenhang ist auszuführen, dass die Spannstange 22 in den Airline-Schienen 20 drehsicher gehalten ist. An dem Gehäuse 26 ist ein Spannstift 48 parallel zur Spannstange gehalten. Der Gurt kann nach Herausklappen des Spannstiftes 48 in eine Öffnungsposition um den Spannstift 48 gelegt werden, um so den Gurtverlauf bei der Absicherung des Stückgutes variieren zu können oder auch das Gurtende an dem Spannstift festlegen zu können.

Wie anhand der horizontal verlaufenden Spannstange zu sehen ist, ist der Spannstift 48 dort an einem Ende an einem Drehgelenk 50 des Gehäuses 44 gelagert und ist an seinem anderen Ende in einem freigebbaren Schnappmechanismus 52 des Gehäuses 44 gehalten. Bei dem an der waagrechten Spannstange 22 angeordneten Befestigungselement 26 ist der Spannstift 48 in Öffnungsstellung dargestellt. Wie anhand von Stückgutbefestigungsbeispielen in Figur 6 und 7 später noch detaillierter gezeigt wird, lässt sich durch diese Führung der Gurte das transportierte Stückgut individuell und sicher festlegen, wobei eine Beschädigung des Stückgutes weitgehend vermieden wird.

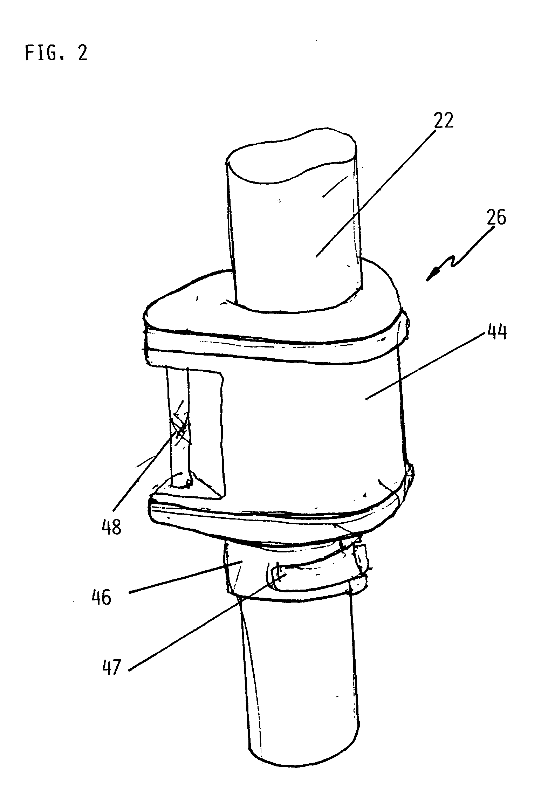

Figur 2 zeigt das Befestigungselement 26 im Detail. Das Gehäuse 44 trägt an einer Seite den Spannstift 48 und an seiner Unterseite eine die Spannstange 22 umgreifende Rohrschelle 46, die sich durch einen Schnellspannhebel 47 an der Spannstange festlegen läßt, womit das Befestigungselement 26 dann axial und in seiner Rotationsstellung an der Spannstange 22 festgelegt ist.

Die Figuren 3 und 4 zeigen noch einmal detaillierter in Seitenansicht und im Querschnitt die Aufroll- und Spannvorrichtung 28 für den Gurt 30. Die gesamte Vorrichtung ist hinter der Außenwand 34 und einer danach angeordneten Dämmschicht 36 in der Seitenwand 16 des Raumes 10 festgelegt. Selbstverständlich können diese Anordnungen auch im Decken- oder Bodenbereich angeordnet sein. Die Aufroll- und Spannvorrichtung 28 umfaßt die Gurtrolle 38, von der aus der Gurt 30 in einer 90 Grad-Drehung um die Achse zum Ratschen-Spannmechanismus 40 läuft. Der Ratschen-Spannmechanismus umfaßt einen mit einer geschlitzten Welle 54 drehfest verbundenen Spannhebel 56, der mit einseitigem Ratschen-Mechanismus versehen ist. Der Gurt 30 ist durch den Schlitz der Welle geführt und wird bei Drehung der Welle auf diese aufgewickelt. Durch den Ratschen-Mechanismus wird die aufgewickelte Stellung festgelegt. Durch einen nicht dargestellten Freigabemechanismus kann die Aufwickel- und Spannposition freigegeben werden. Nach Austritt aus dem Ratschen-Spannmechanismus 40 läuft, wie in Figur 4 zu sehen ist, der Gurt 30 zwischen der Seitenwand und vertikalen Führungsstiften 42, die quer zum Gurtverlauf in der Seitenwand 16 angeordnet sind. Eine Schleife des Gurtes kann nun an beliebiger Stelle zwischen zwei Führungsstiften 42 herausgezogen und um das Stückgut gelegt werden.

Wie in Figur 3 dargestellt ist, kann der Spanngurt 30 auch am Ende ein Befestigungsteil 58 mit einer Öse 60 und oder einem Haken 62 aufweisen, mit der/dem der Spanngurt 30 entweder an einem Führungsstift 42 in einer Wand/Boden/Decke des Raumes 10 oder an dem Spannstift 48 des Befestigungselements 44 festgelegt werden kann.

Die Figuren 5 einerseits und 6 und 7 andererseits sollen anhand eines Ausführungsbeispiels das Festlegen von Stückgut in dem Laderaum eines Kleintransporters vergleichsweise darstellen.

Figur 5 zeigt einen Kleintransporter 60 in horizontalem Schnitt von oben. Auf der Ladefläche 62 befindet sich eine stehende Tonne 64 und eine Palette 66 mit Farbeimern 68. Ein erster Gurt 30a ist um die stehende Tonne 64 geführt und umschließt die Tonne über einen großen Winkelbereich von etwa 270°. Die Befestigung des Gurtes 30a erfolgt dabei so, dass die am Ende gebildete Schlaufe 66 in einen Führungsstift 42 in der Seitenwand des Fahrzeuges eingehängt wird. Hierdurch wird die Tonne 64 zwar sehr gut festgelegt, aufgrund des hohen Umgreifungswinkels wird jedoch ein relativ starker Druck auf die Außenwand der Tonne 64 ausgeübt. An einer anderen Stelle 30b sichert der Gurt die Palette 66 mit den Farbeimern 68. Der Gurt 30b wird dabei an der Stelle 70 um einen Farbtopf 68 herumgeführt, und an seinem Ende 72 in einen Führungsstift 42 in der Vorderwand des Transportraumes eingehängt. Auch hierbei wird auf den im Eckbereich 70 angeordneten Farbeimer eine beträchtliche Druckkraft ausgeübt, die durch die notwendige Spannung des Spanngurtes verursacht wird.

Figur 6 zeigt das Festlegen der Palette 66 mit den Farbeimern mit dem erfindungsgemäßen Festlegungssystem. Die Ladefläche 62 ist hier mit in Fahrtrichtung verlaufenden Airline-Schienen 74 ausgestattet in gleicher Weise wie die in dieser Figur nicht dargestellte Decke. In der rechten Airline-Schiene 74 ist eine Spannstange 22 festgelegt. Der Gurt wird in einer Schleife zwischen den Führungsstiften 42 (Figur 4) herausgeführt und mit seiner Schlaufe an dem Spannstift 48 des Befestigungselements 26 an der Spannstange 22 festgelegt. Durch die Anordnung der Spannstange im Bereich des im abgesicherten Eckbereich befindlichen Farbeimers wird ein Großteil der Zugspannung auf die Spannstange 22 übertragen und somit nicht die Außenwand des Farbeimers 68 belastet. Der Gurt 30 verläuft bei diesem in Figur 6 gezeigten Beispiel somit in einem ersten Weg 30c zur Spannstange 22, ist dort um den Spannstift 48 geführt und läuft auf dem Weg 30d zurück zum Seitenverlauf innerhalb der Führungsstifte 42 in der Seitenwand.

Figur 7 zeigt eine ähnliche Anordnung wie Figur 6 mit zusätzlicher Sicherung einer Tonne. Hier sind in der rechten Airline-Schiene 74 drei Spannstangen 22a bis c vorgesehen. Der Gurt verläuft von seiner Führungsposition in der Seitenwand in einem ersten Zug 30e zur Spannstange 22c, ist in einem zweiten Zug 30f um die Tonne 64 herumgeführt, wodurch diese sanft zwischen den Spannstangen 22c und 22d festgelegt wird und ist anschliessend zur ersten Spannstange 22a geführt, von wo aus sie unter Absicherung der Palette 66 mit den Farbeimern 68 im Zug 30g zur Seitenwand zurückgeführt wird. Somit läßt sich mit einem Gurt eine sichere und das Stückgut wenig beanspruchende Festlegung verschiedener Stückgüter mit nur einem Gurt realisieren, während dies, wie in Figur 5 zu sehen ist, beim Stand der Technik zwei Gurte erfordert. Die Festlegung der Tonne 64 ist hierbei gegenüber dem Stand der Technik in Figur 5 verbessert, weil die Tonne 64 durch den Gurtverlauf 30f gegen zwei Anlagepunkte 22c und 22b gedrückt wird, während sie beim Stand der Technik nur an einem Punkt an der Seitenwand anliegt.

## Patentansprüche

1. Lösbares Befestigungssystem für Stückgut (64,66,68) in einem bewegbaren Transportraum (10), z.B. eines Fahr- oder Flugzeugs, umfassend wenigstens eine Aufroll- und/oder Spannvorrichtung (28) für mindestens einen Spanngurt (30), der in dem Raum (10) mittels dort vorgesehener Befestigungselemente (26) festlegbar und verspannbar ist, um das Stückgut zu sichern, wobei in dem Raum (10) wenigstens eine Spannstange zwischen Boden (14) und Decke (12) bzw. zwischen zwei Wänden (16) in einer oder mehreren unterschiedlichen Stellungen festgelegt oder festlegbar ist, welche Spannstange (22) wenigstens ein Befestigungselement (26) aufweist.

2. System nach Anspruch 1,
bei dem im Raum (10) an Boden, Decke bzw. an einer Wand wenigstens eine Schiene (20) zur variablen Festlegung wenigstens eines Endes (24) der Spannstange (22) ausgebildet und dieses Ende (24) in der Schienen (20) in einer gewünschten Position festlegbar ist.

3. System nach Anspruch 2,
bei dem die Schienen (20) einander gegenüberliegend an Boden (14) und Decke (12) bzw. an zwei gegenüberliegenden Wänden (16) ausgebildet und beide Enden (24) der Spannstange (22) zur Festlegung in den Schienen (20) ausgebildet sind.

4. System nach Anspruch 1 oder 2,
bei dem wenigstens ein Ende der Spannstange (22) mit einem Anlagebereich zur Festlegung gegen eine Wand/Decke/Boden (14) des Raums versehen ist und die Spannstange eine Spannvorrichtung zum axialen Verspannen gegen die Wand/Decke/Boden (14), z.B. einen Teleskopmechanismus mit Schnellspannverschluß oder Federvorspannung, aufweist.

5. System nach Anspruch 4,
bei dem beide Enden der Spannstange (22) jeweils einen Anlagebereich tragen.

6. System nach einem der vorhergehenden Ansprüche,
bei dem das Befestigungselement (26) an der Spannstange (22) drehbar und axial verschiebbar gehalten ist.

7. System nach einem der vorhergehenden Ansprüche,
bei dem das Befestigungselement (26) der Spannstange (22) einen parallel zur Spannstange (22) verlaufenden Spannstift (48) aufweist, der an einem entlang der Spannstange (22) beweglichen Gehäuse (44) gehalten ist.

8. System nach Anspruch 7,
bei dem das Gehäuse eine die Spannstange (22) umschließende Rohrschelle (46) aufweist, die sich durch einen Schnellspannhebel (47) gegen die Spannstange (22) festlegen lässt.

9. System nach Anspruch 7 oder 8,
bei dem der Spannstift an einem Ende am Gehäuse schwenkbar gehalten und am anderen Ende lösbar gehalten ist.

10. System nach einem der vorhergehenden Ansprüche,
bei dem im Verlauf des Spanngurtes eine Spannvorrichtung in Art eines Ratschenmechanismus angeordnet ist.

11. System nach einem der vorhergehenden Ansprüche,
bei dem das Ende des Spanngurtes eine Befestigung, insb. Haken zum Festlegen an dem Befestigungselement (26) der Spannstange (22) aufweist.

12. System nach einem der vorhergehenden Ansprüche,
umfassend wenigstens eine federnd in eine Aufrollposition vorgespannte Aufrollvorrichtung für den Spanngurt.
